# DEMANDE DE BREVET EUROPEEN

(11) **EP 1 022 098 A1**
(43) Date de publication de la demande: **26.07.2000**
(21) Numéro de dépôt: 00400074.1
(22) Date de dépôt: 13.01.2000
(51) Int. Cl.: B25B 25/00

(54) **Outil pour modifier temporairement la tension mécanique d'une courroie et procédé mettant en oeuvre un tel outil**

(30) Priorité: 25.01.1999 FR 9900779
(71) Demandeur: HUTCHINSON, 75008 Paris (FR)
(72) Inventeur: Rointru, Claude, 37130 Mazieres de Touraine (FR); Defeings, Patrice, 37340 Ambillou (FR)
(74) Mandataire: Jacquard, Philippe Jean-Luc

(57) **Abrégé**

La présente invention se rapporte principalement à un outil pour modifier temporairement la tension mécanique d'une courroie d'un circuit cinématique et à un procédé mettant en oeuvre un tel outil.

Un outil selon la présente invention comporte des premiers moyens (39) d'appui sur une première face de la courroie et des seconds moyens (41) d'appui sur une seconde face de la courroie, ces premier et deuxième moyens d'appui étant reliés par une poutre rigide (42) solidarisée ou susceptible d'être solidarisée avec un bras de levier permettant d'exercer sur la courroie une tension permettant l'intervention désirée sur le circuit cinématique sans nécessiter de la part de l'opérateur un effort excessif.

L'invention s'applique notamment à l'industrie mécanique.

L'invention s'applique principalement à l'industrie automobile.

## Description

La présente invention se rapporte principalement à un outil pour modifier temporairement la tension mécanique d'une courroie d'un circuit cinématique et à un procédé mettant an oeuvre un tel outil.

Il est habituel de mettre an oeuvre un tendeur pour induire une forte tension mécanique de fonctionnement dans une courroie d'un circuit cinématique comportant une poulie menante et une ou plusieurs poulies menées. Par exemple, la poulie menante est solidarisée avec l'axe du vilebrequin d'un moteur thermique d'un véhicule automobile, alors que des poulies menées par la courroie sont solidarisées avec divers accessoires de ce moteur, tels que pompes, générateurs électriques ou analogues.

Il est difficile d'atteindre manuellement cette tension de fonctionnement lors de la pose d'un tendeur ou de la vaincre lors de la dépose d'une courroie ou d'un tendeur. De plus, lors d'une opération de maintenance, avec pose et/ou dépose de la courroie, il est fréquent que cette dernière soit endommagée par une arête tranchante.

C'est par conséquent un but de la présente invention d'offrir des moyens simples pour faciliter la pose et/ou la dépose d'une courroie et/ou d'un tendeur d'un circuit cinématique, notamment d'un circuit cinématique de puissance d'un moteur thermique pour véhicule automobile.

C'est également un but de la présente invention d'offrir un tel outil présentant un faible encombrement permettant un accès aisé à une courroie située dans un compartiment moteur d'un tel véhicule.

C'est aussi un but de la présente invention d'offrir un outil particulièrement fiable et, notamment, un outil ne risquant pas de blesser, notamment d'entailler la courroie.

C'est également un but de la présente invention d'offrir un tel outil présentant un faible prix de revient.

Ces buts sont atteints par un outil selon la présente invention comportant des premiers moyens d'appui sur une première face de la courroie et des seconds moyens d'appui sur une seconde face de la courroie, ces premier et deuxième moyens d'appui étant reliés par une poutre rigide solidarisée ou susceptible d'être solidarisée avec un bras de levier permettant d'exercer sur la courroie une tension permettant l'intervention désirée sur le circuit cinématique sans nécessiter de la part de l'opérateur un effort excessif.

Avantageusement, les moyens d'appui comportent deux cylindres chacun susceptible d'être appliqué sur une des faces de la courroie.

Avantageusement, la distance entre les surfaces d'appui sur la courroie est légèrement supérieure à l'épaisseur de la courroie.

L'invention a principalement pour objet un outil de pose et dépose d'une courroie dans un circuit cinématique comportant une poutre formant support des premiers moyens d'appui sur une première face de la courroie et des seconds moyens d'appui sur une seconde face, opposée à la première face, de la courroie.

L'invention a aussi pour objet un outil, caractérisé en ce qu'il comporte des moyens d'accouplement avec un manche.

L'invention a également pour objet un outil, caractérisé en ce que les moyens d'accouplement avec un manche comportent un évidement parallélépipède rectangle de base carrée adapté à recevoir un carré d'une clé à cliquet.

L'invention a aussi pour objet un outil, caractérisé en ce que la poutre est prolongée par un manche solidarisé avec ladite poutre.

L'invention a également pour objet un outil, caractérisé en ce que les moyens d'appui sont des rouleaux.

L'invention a aussi pour objet un outil, caractérisé en ce que les moyens d'appui comportent deux roulements à billes d'axes parallèles.

L'invention a également pour objet un outil, caractérisé en ce que la distance d entre les surfaces d'appui des moyens d'appui, en vis-à-vis est comprise entre 1,1 et 3 fois l'épaisseur e de la courroie à manipuler, de manière préférentielle entre 1,4 et 2 fois l'épaisseur e de cette courroie.

L'invention a aussi pour objet un procédé de dépose d'une courroie d'un circuit cinématique comportant une courroie et des moyens tendeurs de la courroie, caractérisé en ce qu'il comporte les étapes consistant à:
a) introduire un outil autour de la courroie de manière à ce que les premiers moyens d'appui se trouvent en vis-à-vis d'une première face de la courroie et en ce que les seconds moyens d'appui se trouvent en vis-à-vis de la seconde face, opposée à ladite première face de la courroie;
b) tourner l'outil par rapport à la courroie de manière à induire une tension mécanique dans cette courroie assurant la compression des moyens tendeurs de la courroie;
c) désengager la courroie par rapport aux moyens tendeurs;
d) déposer la courroie.

L'invention a également pour objet un procédé, caractérisé en ce que entre les étapes b) et c) , il comporte en outre une étape consistant à bloquer mécaniquement les moyens tendeurs de la courroie dans une condition contrainte, dans laquelle ils n'exercent pas de tension importante sur la courroie.

L'invention a aussi pour objet un procédé de pose d'une courroie dans un circuit cinématique comportant des moyens tendeurs de la courroie, caractérisé en ce qu'il comporte les étapes consistant à:
- bloquer les moyens tendeurs de la courroie dans une condition comprimée;
- poser une courroie;
- introduire un outil autour de la courroie de manière à ce que les premiers moyens d'appui se trouvent en vis-à-vis d'une première face de la courroie et en ce que les seconds moyens d'appui se trouvent en vis-à-vis de la seconde face, opposée à ladite première face de la courroie;
- tourner l'outil par rapport à la courroie de manière à induire une tension mécanique dans cette courroie correspondant au moins à la compression des moyens tendeurs de la courroie;
- libérer les moyens de blocage des moyens tendeurs de la courroie;
- ramener l'outil vers une position de repos dans laquelle il n'induit pas de tension dans la courroie ;
- enlever l'outil.

L'invention sera mieux comprise au moyen de la description ci-après et des figures annexées données comme des exemples non limitatifs et sur lesquelles :
- la figure 1 est une vue schématique d'un circuit cinématique lors d'une intervention avec un outil selon la présente invention ;
- la figure 2 est une vue de côté schématique d'un outil selon la présente invention ;
- la figure 3 est une vue en perspective d'un exemple de réalisation d'un outil selon la présente invention ;
- la figure 4 est une vue en coupe selon IV-IV de l'exemple préféré de réalisation d'un outil selon la présente invention ;
- la figure 5 est une vue arrière de l'outil de la figure 4;
- la figure 6 est une vue en perspective d'une variante monobloc d'un outil selon l'invention.

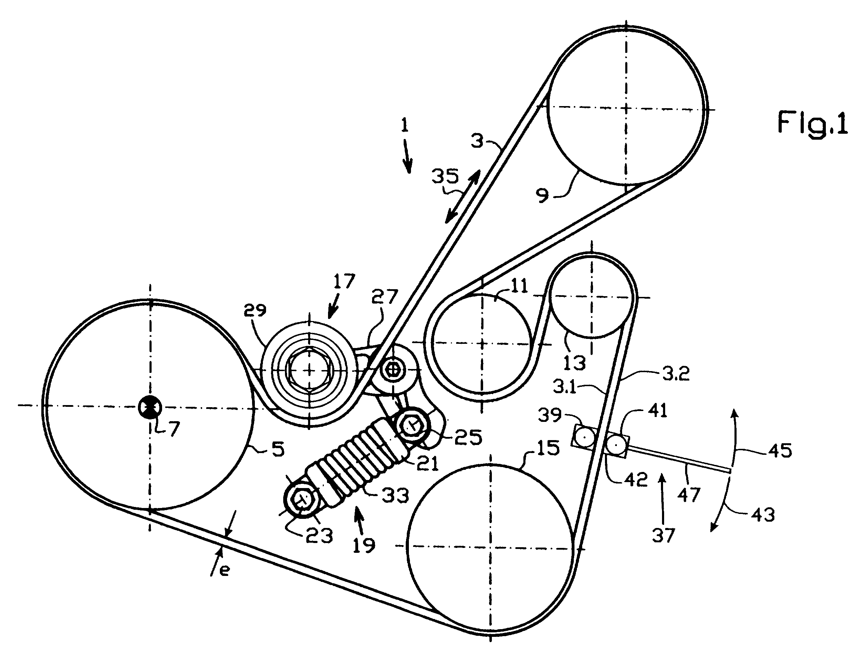

Sur les figures 1 à 6, on a utilisé les mêmes références pour désigner les mêmes éléments.

Sur la figure 1, on peut voir un exemple d'un dispositif mécanique i à courroie 3 de transmission de puissance appelé chaîne cinématique de transmission d'accessoire dans l'industrie automobile. La courroie 3 passe successivement par une poulie 5 solidarisée en rotation avec l'axe 7 d'un vilebrequin d'un moteur thermique d'un véhicule automobile, la poulie 5 assurant l'entraînement de l'ensemble de la chaîne cinématique de transmission d'accessoire de la figure 1.

La courroie 3 passe sur une poulie 9 solidarisée en rotation avec l'axe d'un alternateur, sur un galet de renvoi 11, sur une poulie 13 d'une pompe hydraulique d'alimentation en fluide sous pression de la direction assistée du véhicule et sur une poulie 15 solidarisée en rotation avec l'axe de la pompe à eau du moteur du véhicule.

Dans l'exemple illustré sur la figure 1, un galet 17 d'un tendeur linéaire 19 prend appui sur la face externe de la courroie 3. Dans l'exemple non limitatif illustré sur la figure 1, le tendeur 19 est du type linéaire comportant un corps 21 muni à une première extrémité d'un premier oeil 23 articulé sur un axe fixé au bloc moteur (non représenté), et à une seconde extrémité du corps 21 opposé à la première extrémité d'un oeil 25 fixé à une première extrémité d'un levier 27 en L. La seconde extrémité du levier 27 porte le galet 17 tourillonnant autour d'un axe 29. Avantageusement, le levier 27 est monté à rotation sur le bloc moteur autour d'un axe situé à l'intersection des branches du L. L'oeil 25 permet la rotation relative du levier 27 par rapport au corps 21 du tendeur 19 et l'oeil 23 permet la rotation relative du corps 21 du tendeur 19 par rapport au bloc moteur. Le corps 21 du tendeur 19 comporte des moyens élastiques, par exemple un ressort à boudin 33, assurant l'application avec précontrainte du galet 17 sur la courroie 3. La précontrainte exercée sur la courroie 3 est par exemple comprise entre 20 et 800 N, de préférence entre 70 et 600 N, avantageusement comprise entre 80 et 500 N. Avantageusement, le corps 21 du tendeur 19 comporte en outre un circuit hydraulique coaxial assurant l'amortissement des vibrations longitudinales de la courroie, illustrées par la flèche 35. Un exemple d'un tel circuit hydraulique est décrit dans la Demande internationale PCT/FR93/00245. Il est bien entendu que l'outil selon l'invention peut être mis en oeuvre avec d'autres types de circuits cinématiques notamment avec des circuits comportant d'autres moyens pour tendre la courroie.

Pour déposer la courroie, ou bloquer le tendeur 19 dans une condition contrainte dans laquelle le galet 17 n'induit pas de tension mécanique dans la courroie 3, on place un outil 37 selon la présente invention autour de la courroie de manière à ce que des premiers moyens d'appui 39 se trouvent en vis-à-vis d'une première face 3.1. de la courroie 3 et à ce que des seconds moyens d'appui 41 se trouvent en vis-à-vis de la seconde face 3.2 de la courroie 3. Une poutre rigide 42 supporte les moyens 39 et 41. Un axe passant par les moyens 39 et 41 correspondant à l'axe de la poutre 42 est, au moment de l'installation de l'outil 37, sensiblement perpendiculaire à la portion de la courroie 3 sur laquelle l'outil est installé. Ensuite, on fait tourner l'outil 37 selon la flèche 43 ou 45, en direction de la courroie 3, avantageusement à l'aide d'un manche 47. La rotation de l'outil 37 selon la présente invention assure l'application des moyens 39 et 41 sur les faces 3.1, respectivement 3.2 de la courroie 3, avec déformation de celle-ci. On induit ainsi dans la courroie 3 une tension mécanique supérieure à celle exercée par le tendeur 19 dont les moyens de rappel, notamment le ressort 33 se trouve comprimé par les forces transmises par la courroie 3, le galet 17 et le levier 27. A ce moment là, on met en oeuvre des moyens de blocage du ressort 33 en condition comprimé, par exemple en introduisant une tige dans une ouverture transversale pratiquée sur le corps 21 du tendeur 19 et on ramène l'outil 37 à sa position initiale. On peut alors, sans effort, enlever la courroie 3 pour effectuer les opérations de maintenance désirées.

La pose d'une courroie 3 à l'aide d'un outil 37 selon la présente invention s'effectue de manière analogue en effectuant les opérations en sens inverse. La courroie est posée dans le circuit cinématique 1, le tendeur 19 étant maintenu par des moyens appropriés, notamment par des moyens de blocage du ressort 33 dans sa position contrainte, dans une condition dans laquelle il n'applique pas de tension notable dans la courroie 3. On pose l'outil 37 sur la courroie 3 et on l'incline selon la flèche 43 ou 45. On libère le ressort 33 du tendeur 19, ce qui induit une tension mécanique dans la courroie qu'on relâche doucement en ramenant l'outil 37 vers la position initiale illustrée.

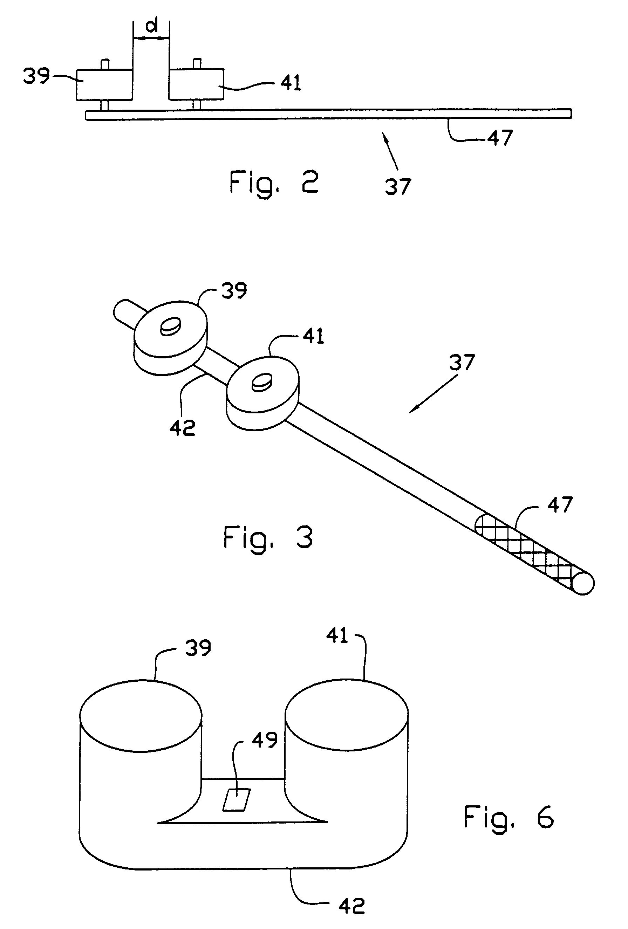

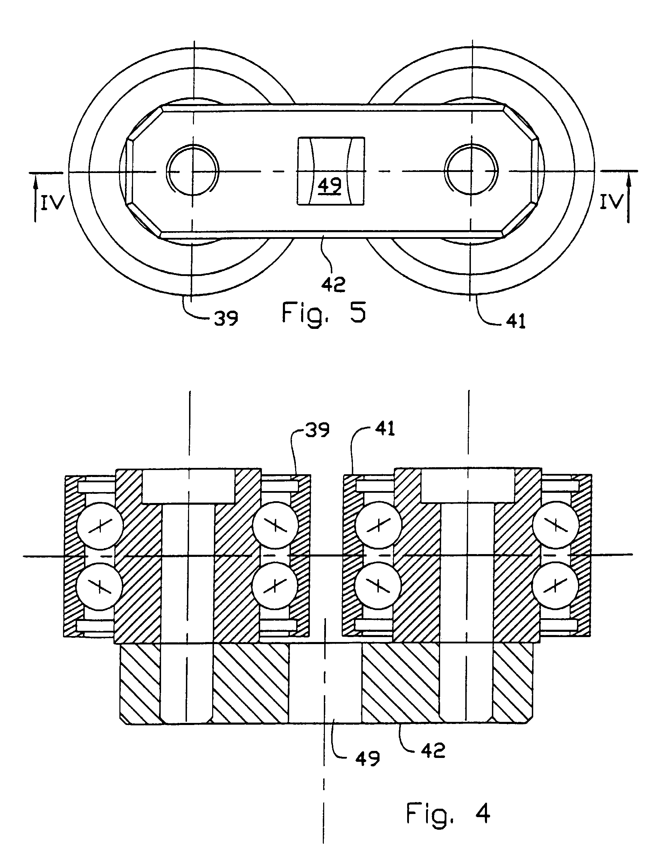

Soit e l'épaisseur de la courroie (figure 1). La distance d entre les surfaces d'application des moyens 39 et 41 (figure 2) est avantageusement légèrement supérieure à e. Avantageusement, 1 ,01e≤d≤4e, de préférence 1 ,05e≤d≤3e, de manière encore préférée 1,05e à 1,5e. Par exemple d = 1,1e. Pour e = 4 à 6 mm, les rouleaux 39 et 41 ont par exemple un diamètre de 40 mm. Avantageusement, les moyens 39 et 41 sont des rouleaux, par exemple des roulements à billes standards ayant une largeur sensiblement égale ou supérieure à la largeur de la courroie. Dans les exemples illustrés sur les figures 2 et 3, les moyens 39 et 41 sont montés à proximité d'une extrémité d'un barreau formant le manche 47 démultipliant les forces d'application des moyens 39 et 41 sur la courroie 3. Dans l'exemple préféré de réalisation, illustré sur les figures 4 et 5 ainsi que dans l'exemple illustré sur la figure 6, les moyens 39 et 41 sont montés sur une poutre 42 de faible longueur comportant des moyens 49 d'adaptation d'un manche externe. Les moyens 49 comportent par exemple un évidement parallélépipède rectangle de base carrée correspondant au carré des clés à cliquet utilisées de manière courante en mécanique. En variante, les moyens 49 comportent une pièce mâle complémentaire d'une pièce femelle d'un manche 47. Ainsi, d'une part l'outil 37 selon la présente invention est de forme compacte et d'un prix de revient particulièrement modéré. De plus, la clé à cliquet peut tourner par rapport à l'axe passant par les moyens 39 et 41 de manière à obtenir l'orientation optimale en fonction de la place disponible sous le capot moteur.

Il est bien entendu que la présente invention n'est pas limitée à la mise en oeuvre de rouleaux comme moyens d'appui 39 et 41 sur la courroie 3 mais englobe tous moyens d'appuis ne risquant pas d'entailler la courroie tels que par exemple surfaces planes, patins arrondis ou non ou analogue.

Dans l'exemple de la figure 6, la poutre 42 et les moyens 39 et 41 sont réalisés sous la forme d'une pièce monobloc, avantageusement métallique, munie de moyens 49 d'adaptation d'un manche externe, par exemple d'un évidement parallélépipède rectangle de base carrée, correspondant au carré des clés à cliquet utilisées de manière courante en mécanique.

Les moyens 39 et 41 comportent, par exemple, des saillies cylindriques identiques parallèles.

L'invention s'applique notamment à l'industrie mécanique.

L'invention s'applique principalement à l'industrie automobile.

## Revendications

1. Outil de pose et dépose d'une courroie, dans un circuit cinématique et comportant une poutre (42) formant support de premiers moyens (39) d'appui sur une premiére face (3.1) de la courroie (30) et de seconds moyens (41) d'appui sur une seconde face (3.2), opposée à la première face, de la courroie (3), lesdits moyens étant aptes, par rotation de l'outil par rapport à la courroie, à assurer une compression de moyens tendeurs de la courroie.

2. Outil selon la revendication 1, caractérisé en ce qu'il comporte des moyens (49) d'accouplement avec un manche (47).

3. Outil selon la revendication 2, caractérisé en ce que les moyens (49) d'accouplement avec un manche (47) comportent un évidement parallélépipède rectangle de base carrée adapté à recevoir un carré d'une clé à cliquet.

4. Outil selon la revendication 1, caractérisé en ce que la poutre (42) est prolongée par un manche (47) solidarisé avec ladite poutre.

5. Outil selon l'une quelconque des revendications précédentes, caractérisé en ce que les moyens d'appui (39, 41) sont des rouleaux.

6. Outil selon l'une quelconque des revendications précédentes, caractérisé en ce que les moyens d'appui (39, 41) comportent deux roulements à billes d'axes parallèles.

7. Outil selon l'une quelconque des revendications précédentes, caractérisé en ce que la distance d entre les surfaces d'appui des moyens d'appui (39, 41), en vis-à-vis est comprise entre 1,1 et 3 fois l'épaisseur e de la courroie à manipuler, de manière préférentielle entre 1,4 et 2 fois l'épaisseur e de cette courroie (3).

8. Procédé de dépose d'une courroie (3) d'un circuit cinématique comportant une courroie (3) et des moyens (19) tendeurs de la courroie, caractérisé en ce qu'il comporte les étapes consistant à:
a) introduire un outil selon l'une quelconque des revendications précédentes autour de la courroie (3) de manière à ce que les premiers moyens d'appui (39) se trouvent en vis-à-vis d'une première face (3.1) de la courroie (3) et en ce que les seconds moyens d'appui (41) se trouvent en vis-à-vis de la seconde face (3.2), opposée à ladite première face (3.1) de la courroie (3);
b) tourner l'outil (37) par rapport à la courroie (3) de manière à induire une tension mécanique dans cette courroie assurant la compression des moyens tendeurs (19) de la courroie (3);
c) désengager la courroie (3) par rapport aux moyens tendeurs (19);
d) déposer la courroie (3).

9. Procédé selon la revendication 8, caractérisé en ce que entre les étapes b) et c) , il comporte en outre une étape consistant à bloquer mécaniquement les moyens (19) tendeurs de la courroie (3) dans une condition contrainte, dans laquelle ils n'exercent pas de tension importante sur la courroie (3).

10. Procédé de pose d'une courroie dans un circuit cinématique comportant des moyens (19) tendeurs de la courroie (3), caractérisé en ce qu'il comporte les étapes consistant à :
- bloquer les moyens (19) tendeurs de la courroie (3) dans une condition comprimée;
- poser une courroie (3);
- introduire un outil selon l'une quelconque des revendications précédentes autour de la courroie (3) de manière à ce que les premiers moyens d'appui (39) se trouvent en vis-à-vis d'une première face (3.1) de la courroie (3) et en ce que les seconds moyens d'appui (41) se trouvent en vis-à-vis de la seconde face (3.2), opposée à ladite première face (3.1) de la courroie (3);
- tourner l'outil (37) par rapport à la courroie (3) de manière à induire une tension mécanique dans cette courroie correspondant au moins à la compression des moyens tendeurs (19) de la courroie (3);
- libérer les moyens de blocage des moyens tendeurs (19) de la courroie (3);
- ramener l'outil (37) vers une position de repos dans laquelle il n'induit pas de tension dans la courroie (3);
- enlever l'outil (37).
